(19) Europäisches Patentamt
European Patent Office
Office européen des brevets

(11) EP 4 389 791 A1

(12) # EUROPEAN PATENT APPLICATION
published in accordance with Art. 153(4) EPC

(43) Date of publication:
**26.06.2024 Bulletin 2024/26**

(21) Application number: **22858516.2**

(22) Date of filing: **18.08.2022**

(51) International Patent Classification (IPC):
***C08G 14/073*** *(2006.01)* ***C09B 59/00*** *(2006.01)*
***C09B 69/10*** *(2006.01)* ***C09K 3/00*** *(2006.01)*
***B41J 2/01*** *(2006.01)* ***G02B 5/22*** *(2006.01)*

(52) Cooperative Patent Classification (CPC):
**B41J 2/01; C08G 14/06; C09B 59/00; C09B 69/10; C09K 3/00; G02B 5/22**

(86) International application number:
**PCT/JP2022/031226**

(87) International publication number:
**WO 2023/022199 (23.02.2023 Gazette 2023/08)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.08.2021 JP 2021133611**
**13.01.2022 JP 2022003854**

(71) Applicant: **SEKISUI CHEMICAL CO., LTD.**
**530-0047 (JP)**

(72) Inventors:
- **ISHII, Masahiro**
  **Mishima-gun, Osaka 618-0021 (JP)**
- **FUKUI, Hiroji**
  **Mishima-gun, Osaka 618-0021 (JP)**
- **SUN, Ren-de**
  **Mishima-gun, Osaka 618-0021 (JP)**
- **SUEMATSU, Mikitoshi**
  **Mishima-gun, Osaka 618-0021 (JP)**
- **KUDO, Takuya**
  **Mishima-gun, Osaka 618-0021 (JP)**

(74) Representative: **Cabinet Beau de Loménie**
**158, rue de l'Université**
**75340 Paris Cedex 07 (FR)**

(54) **NEAR-INFRARED LIGHT TRANSMITTING BLACK PARTICLES**

(57) The present invention provides a near-infrared transmitting black particle having high transmittance in the near-infrared region and low transmittance in the visible region. Provided is a near-infrared transmitting black particle, having a transmittance $T_{600}$ (%) at a wavelength of 600 nm and a transmittance $T_{900}$ (%) at a wavelength of 900 nm that satisfy the relation of the following formula (1) as measured using a spectrophotometer:

$$T_{900} - T_{600} \geq 60 \quad (1).$$

EP 4 389 791 A1

## Description

TECHNICAL FIELD

The present invention relates to near-infrared transmitting black particles.

BACKGROUND ART

Commonly used conventional black materials include carbon black and iron oxide black (triiron tetraoxide). Since these materials provide black color and absorb light at wavelengths from the visible to far-infrared region, coating films and other articles colored with these black materials tend to become hot by absorbing sunlight. Moreover, due to the electrical conductivity of carbon black, articles colored with carbon black have poor electrical insulation.

With the recent use of infrared laser radiation and the corresponding development of sensors in the fields of electronic devices and optical devices, many fields are demanding black materials with properties not found in commonly used conventional black materials such as carbon black.

For example, infrared communication, infrared camouflage, and optical filters have used oil-soluble dyes as coloring materials for infrared transmitting filters. These oil-soluble dyes, however, are insufficient in durability in terms of, for example, heat resistance, solvent resistance, and light resistance. Thus, there is a demand for dark color materials having excellent durability and excellent infrared transmitting properties. Moreover, from an energy saving standpoint, sunlight-reflective, heat-shielding coatings are demanded. Heat-reflective materials for such coatings are demanded for coatings of roofs and walls of structures, road pavements, the exterior and interior of automobiles, as well as temperature rise materials for electronic component coating materials, for example. Heat-reflective materials are also demanded as heat-shielding materials for agriculture, for example.

In particular, black materials sufficiently transparent to light at near-infrared to infrared wavelengths are in practical use. For example, Patent Literature 1 discloses a dark colored azo pigment obtained by coupling reaction of 2-hydroxy-11H-benzo[a]carbazole-3-carboxy-N-benzimidazolone-5-amide used as a coupling component and a known diazo compound used as a diazo component.

Patent Literature 2 discloses a black film having a black material volume fraction of 2% by volume or higher and 30% by volume or lower, an average dispersed particle size in the film of 1 nm or greater and 200 nm or less, an optical density of 1 or greater per um of thickness, and a volume resistivity of $10^{11}$ $\Omega\cdot$cm or higher.

CITATION LIST

- Patent Literature

Patent Literature 1: WO 2010/044393
Patent Literature 2: WO 2012/026577

SUMMARY OF INVENTION

- Technical problem

However, even the materials of Patent Literature 1 and Patent Literature 2 may still have insufficient transmittance in the near-infrared region. The materials may also have high transmittance in the visible region.

The materials of Patent Literature 1 and Patent Literature 2 therefore require thickening the coating film to be formed or adding more black material to block visible light, and thus may limit the coating film design.

In view of the situation in the art, the present invention aims to provide a near-infrared transmitting black particle having high transmittance in the near-infrared region and low transmittance in the visible region.

- Solution to problem

The present disclosure (1) relates to a near-infrared transmitting black particle, having a transmittance $T_{600}$ (%) at a wavelength of 600 nm and a transmittance $T_{900}$ (%) at a wavelength of 900 nm that satisfy the relation of the following formula (1) as measured using a spectrophotometer:

$$T_{900} - T_{600} \geq 60 \quad (1).$$

The present disclosure (2) relates to the near-infrared transmitting black particle according to the present disclosure (1), wherein the $T_{600}$ is lower than 10%, and the $T_{900}$ is higher than 80%.

The present disclosure (3) relates to the near-infrared transmitting black particle according to the present disclosure (1) or (2), having a diffused transmittance $Td_{900}$ (%) at a wavelength of 900 nm of 10% or lower as measured using a spectrophotometer.

The present disclosure (4) relates to the near-infrared transmitting black particle according to any one of the present disclosures (1) to (3), having a diffused transmittance $Td_{1100}$ (%) at a wavelength of 1,100 nm of 10% or lower as measured using a spectrophotometer.

The present disclosure (5) relates to the near-infrared transmitting black particle according to any one of the present disclosures (1) to (4), containing a copolymer including a structural unit derived from a compound having a hydroxy group-containing aromatic ring and a structural unit derived from an amino group-containing compound.

The present disclosure (6) relates to the near-infrared transmitting black particle according to any one of the present disclosures (1) to (5), containing a crosslinking agent.

The present disclosure (7) relates to the near-infrared transmitting black particle according to any one of the present disclosures (1) to (6), wherein the copolymer including a structural unit derived from a compound having a hydroxy group-containing aromatic ring and a structural unit derived from an amino group-containing compound contains an auxochrome.

The present invention is described in detail below.

After extensive studies, the present inventors have found that a near-infrared transmitting black particle can have high transmittance in the near-infrared region and low transmittance in the visible region when its transmittance $T_{600}$ at a wavelength of 600 nm and its transmittance $T_{900}$ at a wavelength of 900 nm satisfy a predetermined relation. The inventors thus completed the present invention.

The near-infrared transmitting black particle of the present invention has a transmittance $T_{600}$ (%) at a wavelength of 600 nm and a transmittance $T_{900}$ (%) at a wavelength of 900 nm that satisfy the relation of the following formula (1) as measured using a spectrophotometer (hereinafter a transmittance at a wavelength of λ nm is referred to as $T_{\lambda}$ (%)).

$$T_{900} - T_{600} \geq 60 \quad (1)$$

By satisfying the relation, the near-infrared transmitting black particle can have high transmittance in the near-infrared region and low transmittance in the visible region.

The "$T_{900}$ - $T_{600}$" is preferably 65% or higher, more preferably 70% or higher.

The upper limit of the "$T_{900}$ - $T_{600}$" is not limited; the higher, the better. The upper limit is preferably 100%.

The $T_{600}$ and $T_{900}$ can be measured, for example, using a spectrophotometer equipped with an integrating sphere, with a reflector plate mounted on the side opposite to the light-incoming side (hereinafter the same measurement method is used for $T_{850}$, $T_{800}$, and $T_{600}$). Herein, the simple "transmittance" refers to "total light transmittance" and is distinguished from "diffused transmittance", which is described later.

The sample used in the measurement of the $T_{600}$ and the $T_{900}$ is produced as follows. The near-infrared transmitting black particle of the present invention and a polyvinyl acetal resin are mixed at 1:9 and dissolved in a solvent. The solution is then applied to a glass plate, and the solvent is dried to form a coating film having a thickness of 30 um. The glass plate with the coating film formed thereon is used as the sample.

To achieve higher transmittance in the infrared region and lower transmittance in the visible region, the following formula (2) is preferably satisfied, and the following formula (3) is more preferably satisfied.

$$T_{850} - T_{600} \geq 60 \quad (2)$$

$$T_{800} - T_{600} \geq 50 \quad (3)$$

The "$T_{850}$ - $T_{600}$" is preferably 65% or higher, more preferably 70% or higher. The upper limit of the "$T_{850}$ - $T_{600}$" is not limited; the higher, the better. The upper limit is preferably 100%.

The "$T_{800}$ - $T_{600}$" is preferably 55% or higher, more preferably 60% or higher. The upper limit of the "$T_{800}$ - $T_{600}$" is not limited; the higher, the better. The upper limit is preferably 100%.

In the near-infrared transmitting black particle of the present invention, the $T_{600}$ is preferably lower than 10%,

more preferably lower than 5%. When the $T_{600}$ is within the range, the visible light blocking properties can be improved, leading to fewer defects such as light leakage from filters or sensor malfunctions. The lower limit of the $T_{600}$ is not limited but is preferably 0%.

The $T_{900}$ is preferably higher than 80%, more preferably higher than 85%. When the $T_{900}$ is within the range, the sensor working efficiency can be improved. The upper limit of the $T_{900}$ is not limited but is preferably 100%.

The near-infrared transmitting black particle of the present invention preferably has a diffused transmittance $Td_{900}$ (%) at a wavelength of 900 nm of 10% or lower as measured using a spectrophotometer. When the $Td_{900}$ (%) is within the range, diffusion of near-infrared light can be suppressed, which increases the use efficiency of transmitted near-infrared light, allowing efficient use of near-infrared light. The $Td_{900}$ is more preferably 3% or lower. The lower limit of the $Td_{900}$ is not limited but is preferably 0%.

The near-infrared transmitting black particle of the present invention preferably has a diffused transmittance $Td_{1100}$ (%) at a wavelength of 1,100 nm of 10% or lower as measured using a spectrophotometer. When the $Td_{1100}$(%) is within the range, diffusion of near-infrared light can be suppressed, which increases the use efficiency of transmitted near-infrared light, allowing efficient use of near-infrared light. The $Td_{1100}$ is more preferably 3% or lower. The lower limit of the $Td_{1100}$ is not limited but is preferably 0%.

The $Td_{900}$ and the $Td_{1100}$ can be measured, for example, using a spectrophotometer equipped with an integrating sphere, with the reflector plate on the side opposite to the light-incoming side removed so that only diffused light stays inside the integrating sphere.

In the near-infrared transmitting black particle of the present invention, the numerical ranges of "$T_{900}$ - $T_{600}$", "$T_{850}$ - $T_{600}$", "$T_{800}$ - $T_{600}$", "$T_{600}$", "$T_{900}$", "$Td_{900}$", and "$Td_{1100}$" can be adjusted by adjusting the composition, proportion, polymerization reaction, and the like of the copolymer including a structural unit derived from a compound having a hydroxy group-containing aromatic ring and a structural unit derived from an amino group-containing compound and the crosslinking agent.

The near-infrared transmitting black particle of the present invention preferably contains a copolymer including a structural unit derived from a compound having a hydroxy group-containing aromatic ring and a structural unit derived from an amino group-containing compound.

By containing the copolymer, the near-infrared transmitting black particle can have high transmittance in the near-infrared region and low transmittance in the visible region.

Examples of the aromatic ring include a benzene ring, a naphthalene ring, and an anthracene ring. Preferred among these are a benzene ring and a naphthalene ring.

Examples of a compound having a hydroxy group-containing naphthalene ring include 1-naphthol, 2-naphthol, dihydroxynaphthalene, trihydroxynaphthalene, tetrahydroxynaphthalene, and pentahydroxynaphthalene. Preferred among these are dihydroxynaphthalene and 1-naphthol. Preferred among dihydroxynaphthalenes are 1,3-dihydroxynaphthalene, 1,5-dihydroxynaphthalene, and 1,6-dihydroxynaphthalene.

Examples of a compound having a hydroxy group-containing benzene ring include phenol and its derivatives, catechol, resorcinol, hydroquinone and its derivatives, hydroxyquinol, phloroglucinol, pyrogallol and its derivatives, and tetrahydroxybenzene and its derivatives.

Preferably, a plurality of compounds having a hydroxy group-containing aromatic ring are used in combination. In this case, preferably, compounds having different hydroxy group-containing aromatic rings are used in combination. More preferably, a compound having a hydroxy group-containing naphthalene ring and a compound having a hydroxy group-containing benzene ring are used in combination. This allows the near-infrared transmitting black particle to exhibit visible light blocking owing to the naphthalene ring and infrared light transmission owing to the benzene ring, which are properties that are difficult to achieve at the same time. A plurality of compounds having a hydroxy group-containing naphthalene ring may be used in combination.

A hydroxy group bonded to an aromatic ring allows the aromatic ring to exhibit nucleophilicity (serves as a starting point of nucleophilic attack by the aromatic ring). Therefore, the aromatic ring preferably has a hydrogen atom at an ortho position and/or a para position to a hydroxy group (in a compound having a hydroxy group-containing naphthalene ring, an ortho position and/or a para position to a hydroxy group on the benzene ring substituted with the hydroxy group). This enables thorough attack.

Specifically, when the hydroxy group-containing naphthalene ring contains one hydroxy group and the hydroxy group is attached to position 1, the hydroxy group-containing naphthalene ring preferably has no substituent but only hydrogen at position 2 and/or position 4. When the hydroxy group is attached to position 2, the hydroxy group-containing naphthalene ring preferably has no substituent but only hydrogen at position 1 and/or position 3. When the hydroxy group-containing naphthalene ring contains two hydroxy groups and one of the hydroxy groups is attached to position 1, the hydroxy group-containing naphthalene ring preferably has no substituent but only hydrogen at position 2 and position 4 and has the other hydroxy group attached to position 5, 6, 7, or 8. When one of the hydroxy groups is attached to position 2, the hydroxy group-containing naphthalene ring preferably has no substituent but only hydrogen at position 1 and position 3 and has the other hydroxy group attached to position 5, 6, 7, or 8.

Specifically, the hydroxy group-containing naphthalene ring preferably has either the structure of the following formula (4) or the structure of the formula (5).

With such a structure, the hydroxy group-derived nucleophilic attack ability of the aromatic ring can be maintained high.

[Chem. 1]

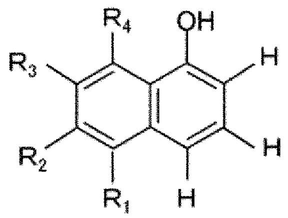

(4)

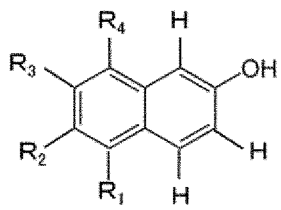

(5)

In the formulas (4) and (5), $R_1$, $R_2$, $R_3$, and $R_4$ each represent hydrogen or an alkyl group having a carbon number of 20 or less.

The compound having a hydroxy group-containing benzene ring preferably contains one to three hydroxy groups, and the compound having a hydroxy group-containing naphthalene ring preferably contains one to four hydroxy groups. This allows the compounds to maintain general nucleophilic attack ability.

The amino group-containing compound functions as an auxochrome that donates electrons to the compound having a hydroxy group-containing aromatic ring as a chromophore.

Thus, the amino group-containing compound may contain a group such as an ether group or a hydroxy group in addition to an amino group.

The amino group-containing compound may be any compound containing an amino group. Examples thereof include those containing a primary amino group, a secondary amino group, or a tertiary amino group. The amino group-containing compound is preferably one containing a primary amino group.

Usable amino group-containing compounds include ammonia, hydrazine, chain aliphatic amines, alicyclic amines, aromatic amines, and alkanolamines.

Preferred among these are aromatic amines.

Examples of the aromatic amines include aromatic monoamines and aromatic polyamines.

Examples of the aromatic monoamines include aniline, p-toluidine, p-ethylaniline, p-anisidine, $\alpha$-naphthylamine, p-butylaniline, p-phenetidine, and 4-aminophenol. Preferred among these are aniline and p-anisidine.

Examples of the aromatic polyamines include N,N-dimethyl-1,4-phenylenediamine, tolylenediamine, and 4,4'-diaminodiphenylmethane.

Particularly preferred among the aromatic polyamines are those having an unsubstituted primary amino group as a first amino group and having an electron-donating alkyl, amino, or alkoxy group at an ortho position or a para position, more preferably a para position to the amino group. The second or further amino group or alkoxy group attached to the para position is preferably substituted by an alkyl group so that it has no active hydrogen. Specifically, aromatic polyamines having the structure of the following formula (6) are preferred.

[Chem. 2]

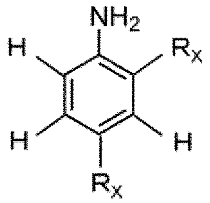

(6)

In the formula (6), $R_X$ represents hydrogen, -OR, or - NR'R". R, R', and R" each represent an alkyl group having a carbon number of 20 or less.

Examples of the chain aliphatic amines include ethylamine, 1-propylamine, 2-propylamine, 1-butylamine, 1-pentylamine, 1-hexylamine, 1-heptylamine, 1-octylamine, 1-laurylamine, 1,2-ethanediamine, 1,3-propanediamine, 1,4-butanediamine, 1,5-pentanediamine, 1,6-hexanediamine, ethylenetriamine, diethylenetriamine, ethylhydrazine, 1-propylhydrazine, 1-butylhydrazine, 1-pentylhydrazine, 1-hexylhydrazine, 1-heptylhydrazine, 1-octylhydrazine, succinic acid dihydrazide, terephthalic acid dihydrazide, guanidine, 1-butylguanidine, 1-cyanoguanidine, and dicyandiamide.

Examples of the alicyclic amines include cyclopropylamine, cyclobutylamine, cyclopentylamine, cyclohexylamine, cyclopropanediamine, isophoronediamine, cyclobutanediamine, cyclopentanediamine, cyclohexanediamine, bis(4-aminocyclohexyl)methane, piperazine, and N-aminoethylpiperazine.

Examples of the alkanolamines include monoethanolamine, diethanolamine, and triethanolamine.

The amino group-containing compound preferably contains one to three amino groups. This allows sufficient reaction between the amino group(s) and the hydroxy group-containing aromatic ring. Moreover, when the compound contains three or fewer amino groups, the individual amino groups can have appropriate basicity. Each amino group is preferably present at a molecule end because then the reactivity is less likely to be affected by steric hindrance.

The copolymer including a structural unit derived from a compound having a hydroxy group-containing aromatic ring and a structural unit derived from an amino group-containing compound preferably contains an auxochrome.

Examples of the auxochrome include the above-described amino groups, as well as a thiol group, an aldehyde group, a carboxy group, and a hydroxy group. The copolymer may contain one or two or more types of auxochrome.

The near-infrared transmitting black particle of the present invention preferably contains a crosslinking agent.

When the crosslinking agent is contained, the copolymer including a structural unit derived from a compound having a hydroxy group-containing aromatic ring and a structural unit derived from an amino group-containing compound can be crosslinked, providing a black particle having excellent handleability with its components resinified. In this case, the copolymer includes the structural unit derived from a compound having a hydroxy group-containing aromatic ring, the structural unit derived from an amino group-containing compound, and a structural unit derived from the crosslinking agent.

The crosslinking agent differs from the compound having a hydroxy group-containing aromatic ring and the amino group-containing compound.

The crosslinking agent is preferably an electrophilic reaction agent susceptible to phenolic nucleophilic attack.

Examples of the crosslinking agent include polyamine crosslinking agents, thiourea crosslinking agents, thiadiazole crosslinking agents, triazine crosslinking agents, quinoxaline crosslinking agents, bisphenol crosslinking agents, organic peroxide crosslinking agents, aldehyde crosslinking agents, and silane crosslinking agents. Phenolic crosslinking agents such as resol phenolic resins can also be used.

Examples of the polyamine crosslinking agents include ethylenediamine, hexamethylenediamine, diethylenetriamine, triethylenetetramine, hexamethylenetetramine, p-phenylenediamine, cumenediamine, N,N'-dicinnamylidene-1,6-hexanediamine, ethylenediamine carbamate, and hexamethylenediamine carbamate.

Examples of the thiourea crosslinking agents include 2-mercaptoimidazoline (ethylene thiourea), 1,3-diethylthiourea, 1,3-dibutylthiourea, and trimethylthiourea.

Examples of the thiadiazole crosslinking agents include 2,5-dimercapto-1,3,4-thiadiazole and 2-mercapto-1,3,4-thiadiazole-5-thiobenzoate.

Examples of the triazine crosslinking agents include 2,4,6-trimercapto-1,3,5-triazine, 2-hexylamino-4,6-dimercaptotriazine, 2-diethylamino-4,6-dimercaptotriazine, 2-cyclohexylamino-4,6-dimercaptotriazine, 2-dibutylamino-4,6-dimercaptotriazine, 2-anilino-4,6-dimercaptotriazine, and 2-phenylamino-4,6-dimercaptotriazine.

Examples of the quinoxaline crosslinking agents include 2,3-dimercaptoquinoxaline, quinoxaline-2,3-dithiocarbonate, 6-methylquinoxaline-2,3-dithiocarbonate, and 5,8-dimethylquinoxaline-2,3-dithiocarbonate.

Examples of the bisphenol crosslinking agents include bisphenol AF and bisphenol S.

Examples of the organic peroxide crosslinking agents include tert-butyl hydroperoxide, p-menthane hydroperoxide, dicumyl peroxide, tert-butyl peroxide, 1,3-bis(tert-butylperoxyisopropyl)benzene, 2,5-dimethyl-2,5-di(tert-butylperoxy) hexane, benzoylperoxide, and tert-butyl peroxybenzoate.

Examples of the aldehyde crosslinking agents include glyoxal, malondialdehyde, succindialdehyde, maleindialdehyde, glutaric dialdehyde, formaldehyde, acetaldehyde, benzaldehyde, and 1,3,5-trioxane.

Examples of the silane crosslinking agents include alkoxysilanes such as methyltrimethoxysilane, dimethyldimethoxysilane, vinyltrimethoxysilane, phenyltrimethoxysilane, and methyltriethoxysilane.

Preferred among these are polyamine crosslinking agents and aldehyde crosslinking agents from the standpoint of ease of addition (solubility in solvents) and high reactivity [the carbon atoms adjacent to electron-withdrawing atoms have a relatively large space around them (less steric hindrance)].

When the near-infrared transmitting black particle of the present invention contains a copolymer including a structural unit derived from a compound having a hydroxy group-containing aromatic ring and a structural unit derived from an amino group-containing compound, the ratio of the structural unit derived from an amino group-containing compound to the structural unit derived from a compound having a hydroxy group-containing aromatic ring (structural unit derived from amino group-containing compound/structural unit derived from compound having hydroxy group-containing aromatic ring) is preferably 0.1 or greater and 50 or less, more preferably 0.5 or greater and 30 or less, still more preferably 0.8 or greater and 10 or less. When the ratio is 0.1 or greater, the visible light blocking properties can be improved. When the ratio is 50 or less, the infrared light transmittance can be improved.

The compound having a hydroxy group-containing aromatic ring is preferably a combination of a compound having a hydroxy group-containing naphthalene ring and a compound having a hydroxy group-containing benzene ring. In this case, the ratio of the structural unit derived from the compound having a hydroxy group-containing benzene ring to the structural unit derived from the compound having a hydroxy group-containing naphthalene ring (structural unit derived from compound having hydroxy group-containing benzene ring/structural unit derived from compound having hydroxy group-containing naphthalene ring) is preferably 0.1 or greater and 50 or less, more preferably 0.5 or greater and 30 or less, still more preferably 1 or greater and 10 or less.

When the near-infrared transmitting black particle of the present invention contains a copolymer including a structural unit derived from a compound having a hydroxy group-containing aromatic ring and a structural unit derived from a crosslinking agent, the ratio of the structural unit derived from a crosslinking agent to the structural unit derived from a compound having a hydroxy group-containing aromatic ring (structural unit derived from crosslinking agent/structural unit derived from a compound having hydroxy group-containing aromatic ring) is preferably 0.3 or greater and 10 or less, more preferably 0.5 or greater and 5 or less, still more preferably 0.5 or greater and 2 or less.

Even when the ratio is 10 or greater, the effects of the present invention may not be improved. When the ratio is 0.3 or less, promoting solidification is difficult.

The copolymer including a structural unit derived from a compound having a hydroxy group-containing aromatic ring and a structural unit derived from an amino group-containing compound can be obtained by polymerizing the compound having a hydroxy group-containing aromatic ring and the amino group-containing compound. In other words, the copolymer including a structural unit derived from a compound having a hydroxy group-containing aromatic ring and a structural unit derived from an amino group-containing compound is a copolymer of a compound having a hydroxy group-containing aromatic ring and an amino group-containing compound.

In the polymerization reaction, the molar ratio of the amino group-containing compound to the compound having a hydroxy group-containing aromatic ring (amino group-containing compound/compound having hydroxy group-containing aromatic ring) is preferably 0.5 or greater and 50 or less, more preferably 0.8 or greater and 10 or less. When the ratio is 0.5 or greater, visible light blocking properties can be improved. When the ratio is 50 or less, the infrared light transmittance can be improved.

The compound having a hydroxy group-containing aromatic ring is preferably a combination of a compound having a hydroxy group-containing naphthalene ring and a compound having a hydroxy group-containing benzene ring. In this case, the molar ratio of the compound having a hydroxy group-containing benzene ring to the compound having a hydroxy group-containing naphthalene ring (compound having hydroxy group-containing benzene ring/compound having hydroxy group-containing naphthalene ring) is preferably 0.5 or greater and 50 or less, more preferably 1 or greater and 10 or less.

In the polymerization reaction, the molar ratio of the crosslinking agent to the compound having a hydroxy group-containing aromatic ring (crosslinking agent/compound having hydroxy group-containing aromatic ring) is preferably 0.5 or greater and 10 or less, more preferably 0.5 or greater and 2 or less.

Even when the ratio is 10 or greater, the effects of the present invention are not improved. When the ratio is 0.5 or less, promoting solidification is difficult.

The temperature in the polymerization is preferably 0°C or higher and preferably 100°C or lower. When the temperature is within the range, the aqueous dispersion of the particle can have appropriate number average particle size.

The polymerization reaction is determined to be complete when determination of the amount of residual monomers in the reaction solution shows that 70% by weight or more of the monomers have been reacted and polymerized.

The amount of residual monomers can be determined, for example, by drying the reaction solution by heating

at or above the temperature at which the compound having a hydroxy group-containing aromatic ring and the amino group-containing compound vaporize, and measuring the residual solid content, or by quantitative analysis by gas chromatography.

In the polymerization, an additive is preferably added.

Examples of the additive include compounds of halogens such as iodine, bromine, and chlorine; protonic acids such as sulfuric acid, hydrochloric acid, nitric acid, perchloric acid, fluoroboric acid, and phosphinic acid; salts of these protonic acids; Lewis acids such as aluminum trichloride, iron trichloride, molybdenum chloride, antimony chloride, arsenic pentafluoride, and antimony pentafluoride; organic carboxylic acids such as acetic acid, trifluoroacetic acid, polyethylenecarboxylic acid, formic acid, benzoic acid, and citric acid; salts of these organic carboxylic acids; phenols such as phenol, nitrophenol, and cyanophenol; and salts of these phenols; sulfosuccinic acids such as di-2-ethylhexylsulfosuccinic acid and sulfosuccinic acid; salts of sulfosuccinic acids; polymer acids such as polyacrylic acid; alkyl phosphates such as propyl phosphate, butyl phosphate, and hexyl phosphate; polyalkylene oxide phosphates such as polyethylene oxide dodecyl ether phosphate and polyethylene oxide alkyl ether phosphate; salts of alkyl phosphates and polyalkylene oxide phosphate; sulfates such as lauryl sulfate, cetyl sulfate, stearyl sulfate, and lauryl ether sulfate; and salts of these sulfates.

The compound having a hydroxy group-containing aromatic ring and the amino group-containing compound preferably have the following molar ratio in terms of compounding ratio: the molar amount of the compound having a hydroxy group-containing aromatic ring is 0.1 to 10 times the molar amount of the amino group-containing compound. When the molar ratio is 0.1 times or greater, the amino group-containing compound can be taken in the particle, allowing the effects of the present invention to be exhibited. When the molar ratio is 10 times or less, the effect of the amino group-containing compound can be enhanced, which allows a clear change in light transmittance between transmission and blocking, resulting in suitable light transmittance.

The near-infrared transmitting black particle of the present invention may be produced, for example, by a method of mixing and reacting the compound having a hydroxy group-containing aromatic ring, the amino group-containing compound, and the crosslinking agent.

A specific example is a method including preparing a solution containing the compound having a hydroxy group-containing aromatic ring, dripping, into the solution, a solution containing the amino group-containing compound to cause reaction, and adding a crosslinking agent solution.

The temperature in the reaction is preferably 0°C or higher and preferably 100°C or lower.

The reaction time is preferably 4 hours or longer and preferably 48 hours or shorter.

In the method of producing the near-infrared transmitting black particle, a drying step may further be performed.

The drying temperature in the drying step is preferably 80°C or higher and preferably 200°C or lower. The drying time is preferably 1 hour or longer and preferably 48 hours or shorter.

The near-infrared transmitting black particle of the present invention can be used in applications such as coating films, black coating materials, black matrices for color filters, and inks for infrared sensors.

When the near-infrared transmitting black particle of the present invention is used to produce coating films, black coating materials, black matrices for color filters, or inks for infrared sensors, the light transmittance is affected by the dispersion medium and dispersing method for the near-infrared transmitting black particle, the resin binder for coating film formation, the particle content, and/or the coating film thickness. By adjustments, hydrophilic to hydrophobic solvents can be selected as the dispersion medium. The particle content can be adjusted to 100 parts by weight or less relative to 100 parts by weight of the resin binder, and the coating film thickness can be adjusted to 30 um or less.

The black matrix can be formed as follows. First, the near-infrared transmitting black particle of the present invention, a curable compound, and optional components such as a curing agent and a solvent are mixed with a stirring device, whereby a composition containing the near-infrared transmitting black particle is produced.

Next, the composition is applied to a substrate and dried to form a coating film.

The coating film is partially exposed via a negative mask to active energy rays, such as UV light or excimer laser light, to form a black matrix having a predetermined pattern.

The operations in the method of forming the black matrix can be performed also with a photosensitive resin composition in which red pigment is dispersed, a photosensitive resin composition in which green pigment is dispersed, and a photosensitive resin composition in which blue pigment is dispersed, so as to form pixel patterns of these colors to form a color filter.

The photosensitive resin composition in which red pigment is dispersed, the photosensitive resin composition in which green pigment is dispersed, and the photosensitive resin composition in which blue pigment is dispersed may be conventionally known ones.

The color filter can also be produced by ejecting red, green, and blue inks via ink-jet nozzles to the respective regions defined by the black matrix, and curing the inks pooling in the regions with heat or light.

The color filter can be suitably used as a component of display devices such as liquid crystal display devices and organic electroluminescence display devices.

- Advantageous Effects of Invention

The present invention can provide a near-infrared transmitting black particle having high transmittance in the near-infrared region and low transmittance in the visible region. Here, the near-infrared transmitting black particle can also have high transmittance on the longer wavelength side of the near-infrared region (wavelengths of 1,100 nm or longer).

Moreover, the near-infrared transmitting black particle of the present invention can have high electrical insulation because it contains no carbon material or metal material.

The near-infrared transmitting black particle of the present invention eliminates the need for thickening the coating film to be formed or adding the particle more than necessary, allowing high flexibility in coating film design.

In addition, the near-infrared transmitting black particle of the present invention can be suitably used in applications such as black coating materials, coating films, black matrices for color filters, and inks for infrared sensors.

BRIEF DESCRIPTION OF DRAWINGS

FIG. 1 is a graph obtained by measuring the total light transmittance of the coating films obtained in Examples 1 to 5 and Comparative Examples 1 and 2 (horizontal axis: wavelength, vertical axis: transmittance).

DESCRIPTION OF EMBODIMENTS

The embodiments of the present invention are more specifically described in the following with reference to examples. These examples are not intended to limit the present invention.

(Example 1)

An amount of 12 g (75 mmol) of 1,5-dihydroxynaphthalene (available from Tokyo Chemical Industry Co., Ltd.) and 37.4 g (225 mmol) of t-butyl catechol (available from Tokyo Chemical Industry Co., Ltd.) were added to 3.5 L of 2-propanol and stirred, whereby a 1,5-dihydroxynaphthalene/t-butyl catechol mixed solution was obtained.

Separately, 55.4 g (450 mmol) of p-anisidine (available from Tokyo Chemical Industry Co., Ltd.) was dissolved in 3.5 L of water, whereby an aqueous solution was obtained.

The obtained aqueous p-anisidine solution was dripped in the 1,5-dihydroxynaphthalene/t-butyl catechol mixed solution and mixed.

The obtained mixture was stirred at room temperature (25°C) for 8 hours, then warmed to 60°C, stirred for an additional 12 hours, and then cooled to room temperature, and 210 g (150 mmol) of a 10% aqueous hexamethylenetetramine (available from FUJIFILM Wako Pure Chemical Corporation) solution was added. The mixture was stirred at room temperature (25°C) for 8 hours, then warmed to 80°C, stirred for an additional 12 hours, and then cooled to room temperature, whereby a particle dispersion was obtained.

The obtained particle dispersion was passed through a 0.1-pm membrane filter, followed by vacuum drying at 110°C for 3 hours, whereby black particles were obtained.

Here, the filtrate contained little solids (weight after drying) (less than 0.1% of the total solid equivalent), indicating that most of the added components were contained in the black particles.

To cyclohexanone were added the obtained black particles at a concentration of 1% by weight and polyvinyl butyral (S-LEC BH-S, available from Sekisui Chemical Co., Ltd.) at a concentration of 9% by weight. They were stirred, whereby a black particle dispersion (cyclohexanone concentration 90% by weight) was obtained.

The obtained black particle dispersion was applied to a glass slide with a coater and dried at 90°C to form a coating film (coating film thickness after drying 30 μm) on the glass slide.

(Example 2)

Black particles and a coating film were obtained as in Example 1 except that 24.8 g (225 mmol) of hydroquinone (available from FUJIFILM Wako Pure Chemical Corporation) was used instead of t-butyl catechol.

(Example 3)

Black particles and a coating film were obtained as in Example 1 except that 10.8 g (75 mmol) of 1-naphthol (available from FUJIFILM Wako Pure Chemical Corporation) was used instead of 1,5-dihydroxynaphthalene.

(Example 4)

Black particles and a coating film were obtained as in Example 1 except that 41.9 g (450 mmol) of aniline (available from FUJIFILM Wako Pure Chemical Corporation) was used instead of p-anisidine.

(Example 5)

Black particles and a coating film were obtained as in Example 1 except that 43.3 g (300 mmol) of 1-naphthol (available from FUJIFILM Wako Pure Chemical Corporation) was used instead of both 1,5-dihydroxynaphthalene and t-butyl catechol, that 12.2 g (90 mmol) of N,N-dimethyl-1,4-phenylenediamine (available from Tokyo Chemical Industry Co., Ltd.) was used instead of p-anisidine, and that 18.6 g (205 mmol) of 1,3,5-trioxane (available from Tokyo Chemical Industry Co., Ltd.) was used instead of the aqueous hexamethylenetetramine solution.

(Examples 6 to 11)

Black particles and a coating film were obtained as in Example 1 except that the compounds and the crosslinking agent shown in Table 1 were used.

(Comparative Example 1)

Black particles and a coating film were obtained as in Example 1 except that 37.4 g (225 mmol) of t-butyl catechol (available from Tokyo Chemical Industry Co., Ltd.) was not added, and that the aqueous p-anisidine solution was not mixed.

(Comparative Example 2)

Black particles and a coating film were obtained as in Example 4 except that 12 g (75 mmol) of 1,5-dihydroxynaphthalene (available from Tokyo Chemical Industry Co., Ltd.) was not added.

(Comparative Example 3)

The same procedure as in Example 1 was performed except that 12 g (75 mmol) of 1,5-dihydroxynaphthalene (available from Tokyo Chemical Industry Co., Ltd.) and 37.4 g (225 mmol) of t-butyl catechol (available from Tokyo Chemical Industry Co., Ltd.) were not added. Neither black particles nor coating film was obtained.

(Evaluation)

The black particles and coating films obtained in the examples and the comparative examples were evaluated as follows. Table 1 shows the results.

(1) Total light transmittance

The light transmittance of the obtained coating films in the wavelength region from 400 to 1,200 nm was measured using a spectrophotometer equipped with an integrating sphere (available from Hitachi, Ltd., model U-4100). Here, in the measurement, the total light transmittance was measured with the reflector plate mounted on the side opposite to the light-incoming side.

Subsequently, the transmittance $T_{600}$ (%) at a wavelength of 600 nm and the transmittance $T_{900}$ (%) at a wavelength of 900 nm were determined, and $T_{900}$ - $T_{600}$ was calculated. The transmittances $T_{650}$, $T_{700}$, $T_{750}$, $T_{800}$, and $T_{850}$ (%) at wavelengths 650, 700, 750, 800, and 850 nm are also shown in Table 1.

Further, the transmittance was measured continuously from $T_{1100}$ (transmittance at a wavelength of 1,100 nm) to $T_{2000}$ (transmittance at a wavelength at 2,000 nm). When the transmittance at the intermediate value ($T_{1550}$) was 90% or higher, the rating "o" (Good) was given. When the transmittance was lower than 90%, the rating "×" (Poor) was given. The $T_{1550}$ means the transmittance at longer wavelengths in the near-infrared region.

FIG. 1 shows a graph of transmittance versus wavelength for Examples 1 to 5 and Comparative Examples 1 and 2.

(2) Diffused transmittance

(1) The same coating films as those used in the total light transmittance measurement were used. The reflector plate on the side opposite to the light-incoming side of the spectrophotometer equipped with an integrating sphere (available from Hitachi, Ltd., model U-4100) was removed so that only diffused light would stay in the integrating sphere while parallel rays would leave therefrom, and the diffused transmittance in the wavelength region from 400 to 1,200 nm was measured.

Subsequently, the diffused transmittance $Td_{600}$ (%) at a wavelength of 600 nm, the diffused transmittance $Td_{900}$ (%) at a wavelength of 900 nm, and the diffused transmittance $Td_{1100}$ (%) at a wavelength of 1,100 nm were determined.

[Table 1]

| | Compound having hydroxy group-containing naphthalene ring | | Compound having hydroxy group-containing benzene ring | | Amino group-containing compound | | Crosslinking agent | | Light transmittance evaluation | | | | | | | | | Diffused transmittance evaluation | | |
|---|---|---|---|---|---|---|---|---|---|---|---|---|---|---|---|---|---|---|---|---|
| | Type | Addition amount (mmol) [a1] | Type | Addition amount (mmol) [a2] | Type | Addition amount (mmol) [B] | Type | Addition amount (mmol) [C] | $T_{600}$ | $T_{650}$ | $T_{700}$ | $T_{750}$ | $T_{800}$ | $T_{850}$ | $T_{900}$ | $T_{900}$ - $T_{600}$ | $T_{1100}$ to $T_{2000}$ | $Td_{600}$ | $Td_{900}$ | $Td_{1100}$ |
| Example 1 | 1,5-Dihydroxynaphthalene | 75 | t-Butyl catechol | 225 | p-Anisidine | 450 | Hexamethylenetetramine | 150 | 2.0 | 2.0 | 3.9 | 33.0 | 70.9 | 84.9 | 89.8 | 87.8 | ○ | 0.1 | 1.2 | 1 |
| Example 2 | 1,5-Dihydroxynaphthalene | 75 | Hydroquinone | 225 | p-Anisidine | 450 | Hexamethylenetetramine | 150 | 26.9 | 56.6 | 78 | 89.2 | 94.6 | 97.1 | 98.4 | 71.5 | ○ | 0.5 | 1.2 | 1 |
| Example 3 | 1-Naphthol | 75 | t-Butyl catechol | 225 | p-Anisidine | 450 | Hexamethylenetetramine | 150 | 3.6 | 8.1 | 14.5 | 36 | 54.4 | 65.3 | 72.7 | 69.1 | ○ | 2.2 | 8.4 | 6.7 |
| Example 4 | 1,5-Dihydroxynaphthalene | 75 | t-Butyl catechol | 225 | Aniline | 450 | Hexamethylenetetramine | 150 | 12.7 | 19.4 | 32 | 56.8 | 69.3 | 76 | 80.3 | 67.6 | ○ | 1 | 1.5 | 1 |
| Example 5 | 1-Naphthol | 300 | - | - | N,N-dimethyl-1,4-phenylenediamine | 90 | 1,3,5-Trioxane | 205 | 0.2 | 0.2 | 1.9 | 18.3 | 62.4 | 89.6 | 96.6 | 96.4 | ○ | 0 | 0.2 | 0.2 |
| Example 6 | 1,5-Dihydroxynaphthalene | 75 | t-Butyl catechol | 225 | N,N-dimethyl-1,4-phenylenediamine | 813 | 1,3,5-Trioxane | 233 | 0.3 | 1.4 | 12 | 35.9 | 58 | 76.2 | 87.2 | 86.9 | ○ | 1.2 | 1 | 0.1 |
| Example 7 | 1,6-Dihydroxynaphthalene | 150 | t-Butyl catechol | 150 | N,N-dimethyl-1,4-phenylenediamine | 406 | Hexamethylenetetramine | 300 | 0.6 | 2.8 | 18.3 | 43.8 | 63 | 75.1 | 82 | 81.4 | ○ | 0.5 | 0.2 | 0.2 |
| Example 8 | 1,5-Dihydroxynaphthalene | 200 | t-Butyl phenol | 111 | N,N-dimethyl-1,4-phenylenediamine | 406 | 1,3,5-Trioxane | 233 | 0 | 0.4 | 11 | 45 | 67.7 | 80.6 | 87.8 | 87.8 | ○ | 1 | 1.2 | 1 |
| Example 9 | 1,5-Dihydroxynaphthalene<br>1-Naphthol | 150<br>173 | - | - | N,N-dimethyl-1,4-phenylenediamine | 102 | 1,3,5-Trioxane | 233 | 0.8 | 1.3 | 10 | 39.7 | 66.3 | 80 | 87.8 | 87 | ○ | 1.8 | 1.4 | 1 |
| Example 10 | 1,6-Dihydroxynaphthalene<br>1,3-Dihydroxynaphthalene | 339<br>100 | Pyrogallol | 50 | N,N-dimethyl-1,4-phenylenediamine | 325 | 1,3,5-Trioxane | 186 | 2.5 | 7.7 | 24 | 43 | 58.6 | 72.1 | 83.2 | 80.7 | ○ | 2.1 | 1.8 | 1 |
| Example 11 | 1-Naphthol | 174 | 4-Ethyl resorcinol | 181 | N,N-dimethyl-1,4-phenylenediamine | 184 | Hexamethylenetetramine | 150 | 0.2 | 0.3 | 3.5 | 28.4 | 69.9 | 89.7 | 95.2 | 95 | ○ | 1.5 | 1.1 | 0.8 |
| Comparative Example 1 | 1,5-Dihydroxynaphthalene | 75 | - | - | - | - | Hexamethylenetetramine | 150 | 9.5 | 16.3 | 26.7 | 36.1 | 43.5 | 49.9 | 56.3 | 46.8 | × | 6 | 32.5 | 32.4 |
| Comparative Example 2 | - | - | t-Butyl catechol | 225 | Aniline | 450 | Hexamethylenetetramine | 150 | 92.2 | 98 | 99.2 | 99.7 | 99.9 | 100.1 | 100.3 | 8.1 | ○ | 1.2 | 0.7 | 0.6 |
| Comparative Example 3 | - | - | - | - | p-Anisidine | 450 | Hexamethylenetetramine | 150 | Coating film not producible | | | | | | | | | Coating film not producible | | |

## INDUSTRIAL APPLICABILITY

The present invention can provide a near-infrared transmitting black particle having high transmittance in the

near-infrared region and low transmittance in the visible region.

## Claims

1. A near-infrared transmitting black particle, having a transmittance $T_{600}$ (%) at a wavelength of 600 nm and a transmittance $T_{900}$ (%) at a wavelength of 900 nm that satisfy the relation of the following formula (1) as measured using a spectrophotometer:

$$T_{900} - T_{600} \geq 60 \quad (1).$$

2. The near-infrared transmitting black particle according to claim 1, wherein the $T_{600}$ is lower than 10%, and the $T_{900}$ is higher than 80%.

3. The near-infrared transmitting black particle according to claim 1 or 2, having a diffused transmittance $Td_{900}$ (%) at a wavelength of 900 nm of 10% or lower as measured using a spectrophotometer.

4. The near-infrared transmitting black particle according to any one of claims 1 to 3, having a diffused transmittance $Td_{1100}$ (%) at a wavelength of 1,100 nm of 10% or lower as measured using a spectrophotometer.

5. The near-infrared transmitting black particle according to any one of claims 1 to 4, containing a copolymer including a structural unit derived from a compound having a hydroxy group-containing aromatic ring and a structural unit derived from an amino group-containing compound.

6. The near-infrared transmitting black particle according to any one of claims 1 to 5, containing a crosslinking agent.

7. The near-infrared transmitting black particle according to any one of claims 1 to 6, wherein the copolymer including a structural unit derived from a compound having a hydroxy group-containing aromatic ring and a structural unit derived from an amino group-containing compound contains an auxochrome.

FIG.1

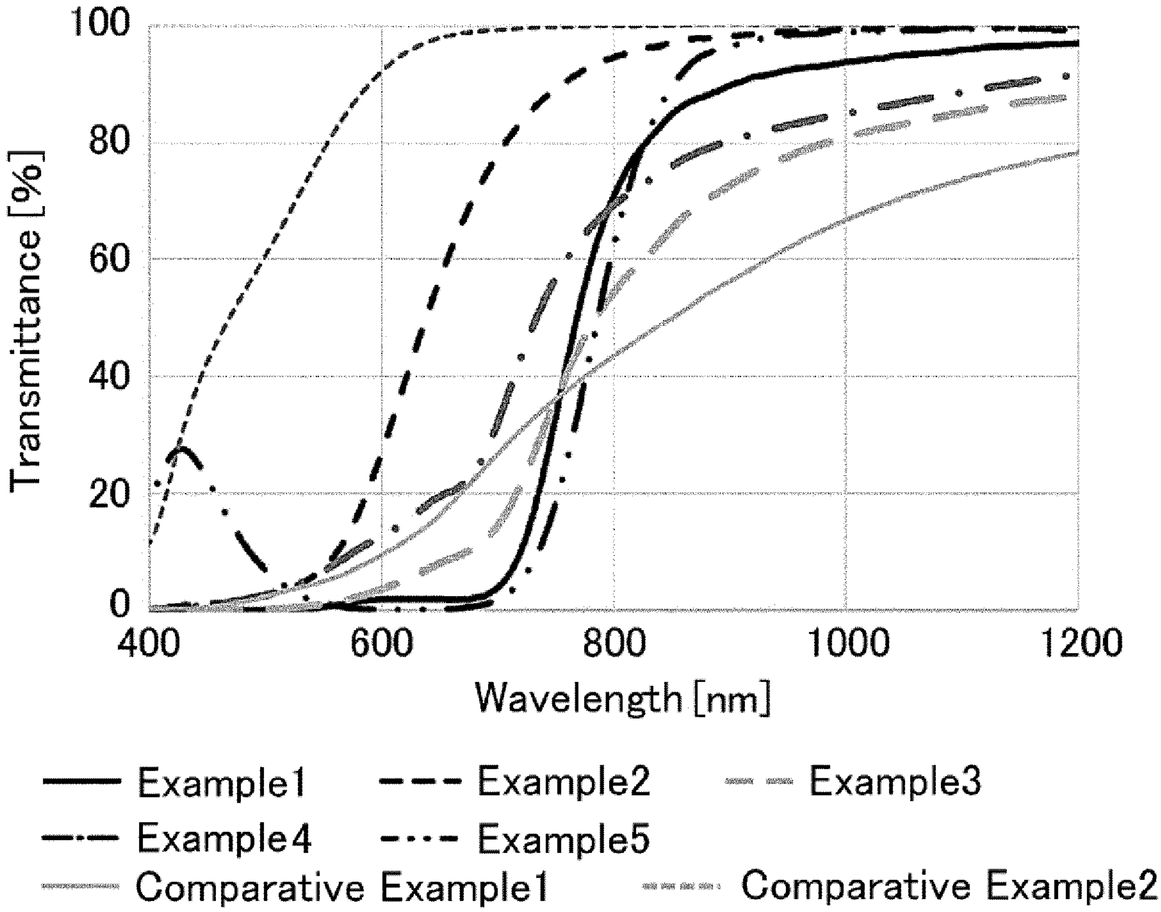
100
80
60
40
20
0
Transmittance [%]
400
600
800
1000
1200
Wavelength [nm]
Example1
Example2
Example3
Example4
Example5
Comparative Example1
Comparative Example2

## INTERNATIONAL SEARCH REPORT

International application No.
**PCT/JP2022/031226**

**A. CLASSIFICATION OF SUBJECT MATTER**

***C08G 14/073***(2006.01)i; ***C09B 59/00***(2006.01)i; ***C09B 69/10***(2006.01)i; ***C09K 3/00***(2006.01)i; ***B41J 2/01***(2006.01)i; ***G02B 5/22***(2006.01)i
FI: C09B69/10 Z; C08G14/073; G02B5/22; C09B59/00; B41J2/01 501; C09K3/00 105

According to International Patent Classification (IPC) or to both national classification and IPC

**B. FIELDS SEARCHED**

Minimum documentation searched (classification system followed by classification symbols)

C08G14/073; C09B59/00; C09B69/10; C09K3/00; B41J2/01; G02B5/22

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | JP 2015-110691 A (DAINICHISEIKA COLOR & CHEM MFG CO LTD) 18 June 2015 (2015-06-18)<br>claims, paragraphs [0037]-[0041], [0063], example 1 | 1-7 |
| X<br>A | WO 2019/230684 A1 (TORAY INDUSTRIES, INC.) 05 December 2019 (2019-12-05)<br>claims, paragraph [0010], examples 1-9 | 1-4<br>5-7 |
| A | JP 2002-348491 A (DAINICHISEIKA COLOR & CHEM MFG CO LTD) 04 December 2002 (2002-12-04)<br>claims, examples | 1-7 |
| A | JP 11-236514 A (DAINICHISEIKA COLOR & CHEM MFG CO LTD) 31 August 1999 (1999-08-31)<br>claims, examples | 1-7 |
| A | WO 2021/070694 A1 (SUMITOMO CHEMICAL CO) 15 April 2021 (2021-04-15)<br>claims, examples | 1-7 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **26 September 2022** | **11 October 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | <br><br>Telephone No. |

Form PCT/ISA/210 (second sheet) (January 2015)

**INTERNATIONAL SEARCH REPORT**

International application No.
**PCT/JP2022/031226**

**C. DOCUMENTS CONSIDERED TO BE RELEVANT**

| Category* | Citation of document, with indication, where appropriate, of the relevant passages | Relevant to claim No. |
|---|---|---|
| A | WO 2018/034082 A1 (FUJIFILM CORPORATION) 22 February 2018 (2018-02-22) claims, examples | 1-7 |
| A | WO 2016/052641 A1 (DAI NIPPON PRINTING CO., LTD.) 07 April 2016 (2016-04-07) claims, examples | 1-7 |
| A | JP 11-269136 A (HAKKOL CHEMICAL CO., LTD.) 05 October 1999 (1999-10-05) claims, examples | 1-7 |

Form PCT/ISA/210 (second sheet) (January 2015)

**INTERNATIONAL SEARCH REPORT**
**Information on patent family members**

International application No.
**PCT/JP2022/031226**

| Patent document cited in search report | Publication date (day/month/year) | Patent family member(s) | Publication date (day/month/year) |
|---|---|---|---|
| JP 2015-110691 A | 18 June 2015 | (Family: none) | |
| WO 2019/230684 A1 | 05 December 2019 | US 2021/0179809 A1<br>claims, paragraph [0014], examples 1-9<br>EP 3805822 A1<br>CN 112189154 A<br>KR 10-2021-0016348 A<br>TW 202003721 A | |
| JP 2002-348491 A | 04 December 2002 | US 2002/0121228 A1<br>claims, examples<br>EP 1219684 A1<br>CA 2365794 A<br>TW 574323 B<br>AU 9739001 A<br>KR 10-2002-0053726 A<br>CN 1361206 A<br>CA 2365794 A1 | |
| JP 11-236514 A | 31 August 1999 | (Family: none) | |
| WO 2021/070694 A1 | 15 April 2021 | CN 114402017 A<br>TW 202120627 A | |
| WO 2018/034082 A1 | 22 February 2018 | CN 114402017 A<br>TW 202120627 A | |
| WO 2016/052641 A1 | 07 April 2016 | EP 3202861 A1<br>claims, examples<br>CN 106795383 A<br>KR 10-2017-0063719 A<br>TW 201631060 A<br>CN 113354975 A<br>TW 202102618 A | |
| JP 11-269136 A | 05 October 1999 | US 6140477 A<br>claims, examples<br>DE 19913336 A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2010044393 A
- WO 2012026577 A